# EUROPEAN PATENT SPECIFICATION

(11) **EP 2 730 046 B1**
(45) Date of publication and mention of the grant of the patent: **13.05.2015**
(21) Application number: 11770911.3
(22) Date of filing: 04.07.2011
(51) Int. Cl.: H04W 72/04, H04W 84/04, H04L 5/00

(54) **Methods and apparatuses for an extended bandwidth carrier**
Verfahren und Vorrichtungen für einen Träger mit erweiterter Bandbreite
Procédés et dispositifs pour porteuse à bande passante élargie

(43) Date of publication of application: 14.05.2014
(73) Proprietor: Telefonaktiebolaget LM Ericsson (PUBL), 164 83 Stockholm (SE)
(72) Inventor: FRENNE, Mattias, SE-754 43 Uppsala (SE); BALDEMAIR, Robert, SE-170 69 Solna (SE); CHENG, Jung-Fu, Fremont California CA 94539 (US); GERSTENBERGER, Dirk, SE-186 53 Vallentuna (SE); KOORAPATY, Havish, Saratoga, California CA 95070 (US); LARSSON, Daniel, SE-186 53 Vallentuna (SE)
(74) Representative: Kühn, Friedrich Heinrich
(86) International application number: PCT/SE2011/050900
(87) International publication number: WO 2013/006101

(56) References cited:
- WO-A1-2010/049754
- HUAWEI: "Concept for downlink carrier aggregation in LTE-Advanced", 3GPP DRAFT; R1-083703, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Prague, Czech Republic; 20080924, 24 September 2008 (2008-09-24), pages 1-4, XP050317045, [retrieved on 2008-09-24]
- QUALCOMM EUROPE: "Carrier Aggregation Operation in LTE-Advanced", 3GPP DRAFT; R1-083193, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Jeju; 20080812, 12 August 2008 (2008-08-12), pages 1-5, XP050316622, [retrieved on 2008-08-12]
- ERICSSON: "Carrier aggregation in LTE-Advanced", 3GPP DRAFT; R1-082468, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Warsaw, Poland; 20080624, 24 June 2008 (2008-06-24), pages 1-6, XP050110739, [retrieved on 2008-06-24]

## Description

### TECHNICAL FIELD

The present invention relates generally to telecommunications systems, and in particular, to methods, systems, devices and software for using an extended bandwidth carrier.

### BACKGROUND

Radiocommunication networks were originally developed primarily to provide voice services over circuit-switched networks. The introduction of packet-switched bearers in, for example, the so-called 2.5G and 3G networks enabled network operators to provide data services as well as voice services. Eventually, network architectures will likely evolve toward all Internet Protocol (IP) networks which provide both voice and data services. However, network operators have a substaritial investment in existing infrastructures and would, therefore, typically prefer to migrate gradually to all IP network architectures in order to allow them to extract sufficient value from their investment in existing infrastructures. Also to provide the capabilities needed to support next generation radiocommunication applications, while at the same time using legacy infrastructure, network operators could deploy hybrid networks wherein a next generation radiocommunication system is overlaid onto an existing circuit-switched or packet-switched network as a first step in the transition to an all IP-based network. Alternatively, a radiocommunication system can evolve from one generation to the next while still providing backward compatibility for legacy equipment.

One example of such an evolved network is based upon the Universal Mobile Telephone System (UMTS) which is an existing third generation (3G) radiocommunication system that is evolving into High Speed Packet Access (HSPA) technology. Yet another alternative is the introduction of a new air interface technology in E-UTRAN, wherein Orthogonal Frequency Division Multiple Access (OFDMA) technology is used in the downlink and single carrier frequency division multiple access (SC-FDMA) in the uplink. In both uplink and downlink the data transmission is split into several sub-streams, where each sub-stream is modulated on a separate sub-carrier. Hence in OFDMA based systems, the available bandwidth is sub-divided into several resource blocks (RB) as defined, for example, in 3GPP TR 25.814: "Physical Layer Aspects for Evolved UTRA". According to this document, a resource block is defined in both time and frequency. A physical resource block size is 180 KHz and 1 time slot (0.5 ms) in frequency and time domains, respectively. The overall uplink and downlink transmission bandwidth in a single carrier LTE system can be as large as 20 MHz.

An E-UTRA system under single carrier operation may be deployed over a wide range of bandwidths, e.g. 1.25,2.5, 5, 10, 15, 20 MHz, etc. As an example a 10 MHz bandwidth would contain 50 resource blocks. For data transmission the network can allocate variable number of RB to the UE both in the uplink and downlink. This allows more flexible use of channel bandwidth since it is allocated according to the amount of data to be transmitted, radio conditions, UE capability, scheduling scheme etc. In addition the neighboring cells, even on the same carrier frequency, may have different channel bandwidths.

Multi-carrier (also known as the carrier aggregation (CA)), refers to the situation where two or more component carriers (CC) are aggregated for the same UE. CA enables manifold increase in the downlink and uplink data rate. For example, it is possible to aggregate different number of component carriers of possibly different bandwidths in the UL and the DL.

Carrier aggregation thus allows the UE to simultaneously receive and transmit data over more than one carrier frequency. Each carrier frequency is generally called a component carrier. This enables a significant increase in data reception and transmission rates. For instance 2 x 20 MHz aggregated carriers would theoretically lead to two fold increase in data rate compared to that attained by a single 20 MHz carrier. The component carrier may be contiguous or non-contiguous. Furthermore in case of non-contiguous carriers, they may belong to the same frequency band or to different frequency bands. This is often referred to as inter-band CA.

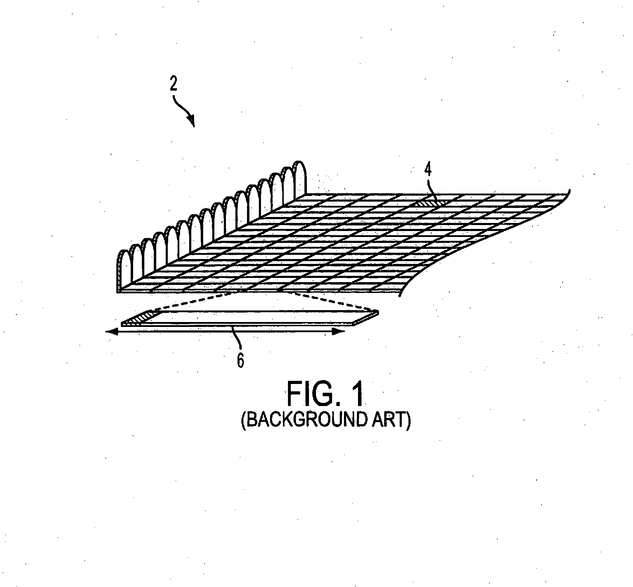

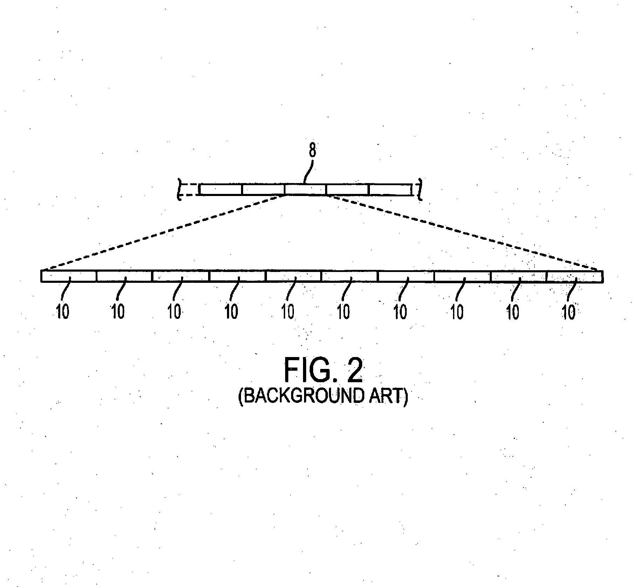

LTE uses OFDM in the downlink and DFT-spread OFDM in the uplink. The basic LTE downlink physical resource can thus be seen as a time-frequency grid 2 as illustrated in Figure 1, where each resource element 4 corresponds to one OFDM subcarrier 6 during one OFDM symbol interval. In the time domain, LTE downlink transmissions are organized into radio frames of 10 ms as shown in Figure 2, each radio frame 8 consisting of ten equally-sized subframes 10 of length T_{subrame}= 1 ms. Furthermore, the resource allocation in LTE is typically described in terms of resource blocks (RB), where a resource block corresponds to one slot (0.5 ms) in the time domain and 12 contiguous subcarriers in the frequency domain. A pair of two adjacent resource blocks in time direction (1.0 ms) is known as a resource block pair. Resource block pairs are numbered in the frequency domain, starting with 0 from one end of the system bandwidth.

The notion of virtual resource blocks (VRB) and physical resource blocks (PRB) has been introduced in LTE. The actual resource allocation to a UE is made in terms of VRB pairs. There are two types of resource allocations, localized and distributed. In the localized resource allocation, a VRB pair is directly mapped to a PRB pair, hence two consecutive and localized VRBs are also placed as consecutive PRBs in the frequency domain. On the other hand, the distributed VRBs are not mapped to consecutive PRBs in the frequency domain, thereby providing frequency diversity for data channel transmitted using these distributed VRBs.

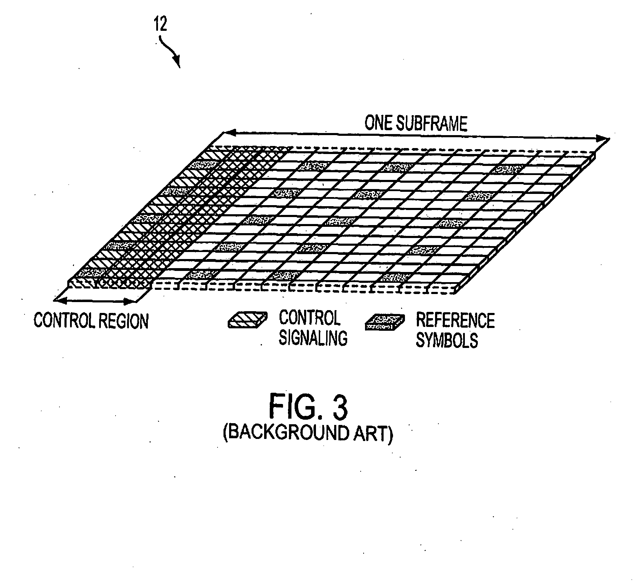

Downlink transmissions are dynamically scheduled, i.e., in each subframe the base station transmits control information about to which terminals data is transmitted and upon which resource blocks the data is transmitted, in the current downlink subframe. This control signalling is typically transmitted in the first 1,2,3 or 4 OFDM symbols in each subframe and the number n=1, 2, 3 or 4 is known as the Control Format Indicator (CFI). The downlink subframe also contains common reference symbols (CRS), which are known to the receiver and used for coherent demodulation of e.g. the control information. A downlink (DL) system 12 with CFI=3 OFDM symbols as control is illustrated in Figure 3.

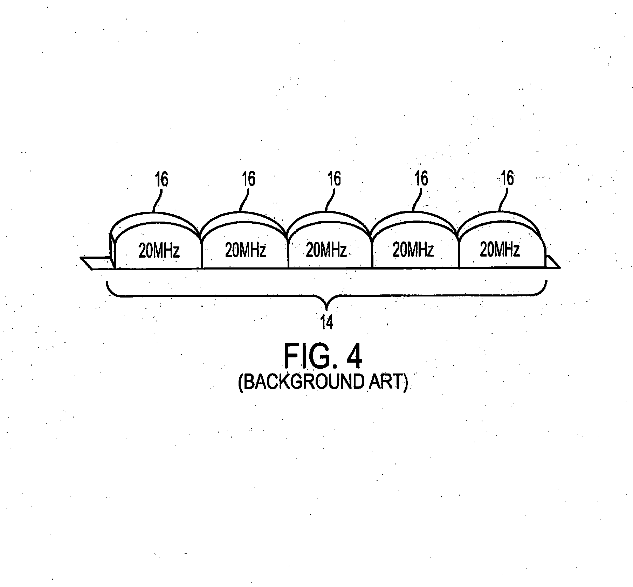

The LTE Rel-10 specifications have recently been standardized, supporting CC bandwidths up to 20 MHz (which is the maximal LTE Rel-8 carrier bandwidth). Hence, an LTE Rel-10 operation wider than 20 MHz is possible and can appear as a number of LTE carriers to an LTE Rel-10 terminal. In particular for early LTE Rel-10 deployments it can be expected that there will be a smaller number of LTE Rel-10-capable terminals compared to many LTE legacy terminals. Therefore, it is necessary to assure an efficient use of a wide carrier also for legacy terminals, i.e. that it is possible to implement carriers where legacy terminals can be scheduled in all parts of the wideband LTE Rel-10 carrier. The straightforward way to obtain this would be by means of CA. CA implies that an LTE Rel-10 terminal can receive multiple CCs, where the CCs have, or at least the possibility to have, the same structure as a Rel-8 carrier. An example of CA is illustrated in Figure 4 which shows an aggregated bandwidth of 100 MHz 14 which can be achieved by using five 20 MHz carriers 16, all of which are contiguous.

The LTE Rel-10 standard supports up to five aggregated carriers where each carrier is limited in the RF specifications to have a one of six bandwidths namely 6, 15, 25, 50, 75 or 100 RB (corresponding to 1.4, 3, 5, 10, 15 and 20 MHz respectively). The number of aggregated CCs as well as the bandwidth of the individual CC may be different for uplink (UL) and DL. A symmetric configuration refers to the case where the number of CCs in downlink and uplink is the same whereas an asymmetric configuration refers to the case that the number of CCs is different. The number of CCs configured in the network may be different from the number of CCs seen by a terminal (or user equipment). A terminal may, for example, support more downlink CCs than uplink CCs, even though the network offers the same number of uplink and downlink CCs.

During initial access a LTE Rel-10 terminal behaves similar to a LTE Rel-8 terminal. Upon successful connection to the network a terminal may, depending on its own capabilities and the network, be configured with additional CCs in the UL and DL. Configuration is based on radio resource control (RRC). Due to the heavy signaling and rather slow speed of RRC signaling it is envisioned that a terminal may be configured with multiple CCs even though not all of them are currently used. If a terminal is activated on multiple CCs this would imply it has to monitor all DL CCs for PDCCH and PDSCH. This implies a wider receiver bandwidth, higher sampling rates, etc. resulting in high power consumption.

There have been discussions in 3GPP on variants of a component carrier, such as carrier segments. A carrier segment is a carrier extension with one or multiple non-backward compatible bandwidth parts which are contiguous with the component carrier they are associated with. Scheduling a terminal in a carrier segment takes place by a single PDCCH that can address any resource blocks in the backward compatible part plus the associated segment(s).

The available spectrum is in reality fragmented into (sometimes adjacent) bandwidth pieces with a large number of different bandwidths (for example 1.25, 2, 2.5, 3.75, 6, 12 and 18 MHz) that do not in general match the currently six supported legacy bandwidths in Rel-8: 1.4, 3, 5, 10, 15 and 20 MHz. It is therefore a problem how to utilize fragmented spectrum pieces and fully utilize new carrier bandwidths and still maintain backward compatibility to legacy UEs. Using carrier segments has been proposed as a possible solution to solve these issues. However, when introducing carrier segments, there are further problems. For example, the capacity of the physical downlink control channel (PDCCH) will be a bottleneck in utilizing the available extended bandwidth using a solution which carrier segments provide. This issue is exaggerated by the new system bandwidth (with segments) which is large when compared to the backward compatible bandwidth (without segments).

Furthermore, since legacy terminals and new terminals will see different effective bandwidths when one or multiple segments are introduced, it is a problem how to address (enumerate) the resource blocks in, e.g., the physical downlink shared channel (PDSCH) or physical uplink shared channel (PUSCH) scheduling of the shared data channel with a common RB enumeration method.

Accordingly, it would be desirable to develop other methods, devices, systems and software for improving communications.

The patent publication WO 2010/049754 A1 discloses a method, comprising: forming a resource allocation for a particular system bandwidth, where the resource allocation comprises a larger number of resource blocks than a maximum number of resource blocks associated with the particular system bandwidth while maintaining a same resource block group size as would be present with the maximum number of resource blocks for the particular system bandwidth, where forming comprises use of an extended parameter in a derivation of the resource allocation; and transmitting information descriptive of the resource allocation to user equipment, where the user equipment is enabled to employ a plurality of extended control channel elements as an extended control channel.

### SUMMARY

Exemplary embodiments describe using an extended bandwidth carrier and allowing new and legacy user equipment (UEs) to operate together. By using an extended bandwidth carrier as described in exemplary embodiments, the new and legacy UEs can be scheduled without restrictions using a same resource allocation method. This can be achieved by using the additional resource blocks which are added to a legacy bandwidth and by putting control signaling into regions of the extended bandwidth carrier other than the legacy control bandwidth. The invention is carried out according to independent claims 1, 2, 9 and 11.

### BRIEF DESCRIPTION OF THE DRAWINGS

Embodiments and examples of the present invention will now be described, by way of example only, with reference to the attached Figures, wherein:
Figure 1 illustrates a Long Term Evolution (LTE) downlink physical resource as a time-frequency grid;
Figure 2 shows a radio frame which includes ten subframes;
Figure 3 illustrates a downlink system;
Figure 4 depicts an aggregated bandwidth;
Figure 5 shows an extended bandwidth carrier with a double sided extension according to examples;
Figure 6 shows an extended bandwidth carrier with a single extension according to examples;
Figure 7 illustrates a double sided extended bandwidth carrier with two slots in the uplink according to examples;
Figure 8 shows an extended bandwidth carrier where with a plurality of downlink control regions according to embodiments;
Figure 9 illustrates a numbering scheme for a plurality of physical resource block (PRB) pairs according to examples;
Figure 10 shows scheduling when using a wrap around numbering scheme according to examples;
Figure 11 depicts an alternative wrap around numbering scheme according to examples;
Figure 12 shows two legacy bandwidth carriers embedded within an extended bandwidth carrier according to examples;
Figure 13 depicts a PRB numbering scheme for an extended bandwidth carrier with two legacy carriers according to examples;
Figure 14 illustrates an extended bandwidth carrier with two legacy carriers each of which has two associated extended regions according to examples;
Figure 15 shows a base station communicating with a new UE and a legacy UE according to examples;

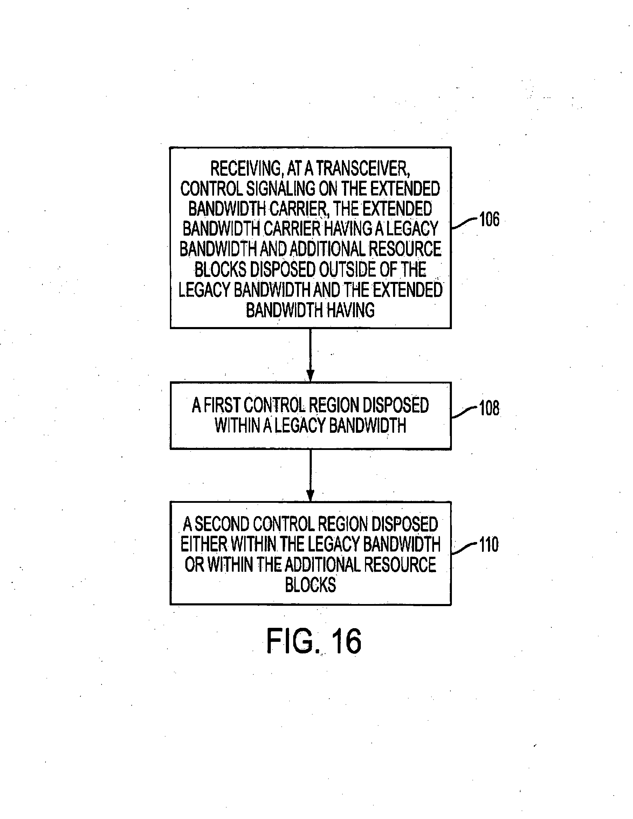

Figure 16 is a flow chart illustrating a method for using an extended bandwidth carrier according to examples;
Figure 17 depicts a user equipment according to examples;
Figure 18 depicts a base station according to examples; and
Figure 19 is a flow chart illustrating a method for a base station to use an extended bandwidth carrier according to examples.

### DETAILED DESCRIPTION

The following detailed description of the embodiments and examples refers to the accompanying drawings. The same reference numbers in different drawings identify the same or similar elements. Also, the following detailed description does not limit the invention.

According to an example, a new (non-legacy) terminal cam operate and use parts of, or an entire extended bandwidth carrier and also read control channel information transmitted outside the legacy control channel region. The enumeration of the resource blocks (RBs) in the legacy and the extended region or regions, i.e., segments, can be constructed so that legacy and novel terminals can have a common RB numbering scheme in the legacy region and a continuation of the RB numbering scheme in extended regions such that the numbering is not constrained by the number of, or placement of, added segments.

Prior to describing the various embodiments and examples in more detail, concepts for supporting the various embodiments and examples are now described. A carrier can be defined with one or multiple legacy regions and one or multiple new (non-backward compatible) regions/segments. Two classes of user equipment (UE) (or user terminals) can be described with the legacy UEs being the first class and so-called "new UEs" being the second class, where the legacy UEs correspond, in third Generation Partnership Project (3GPP) terms, to Release 8, 9 or 10 UEs. The new UEs belong to a release later than Release 10. An extended carrier can be obtained by adding additional resource blocks on one or both sides of a legacy carrier bandwidth, to obtain a larger carrier through a single or double sided extension respectively. Fragmented spectrum pieces or system bandwidths that are not part of the set of six supported legacy bandwidths can then be covered by a single extended carrier and legacy UEs can access this carrier in the corresponding legacy bandwidth.

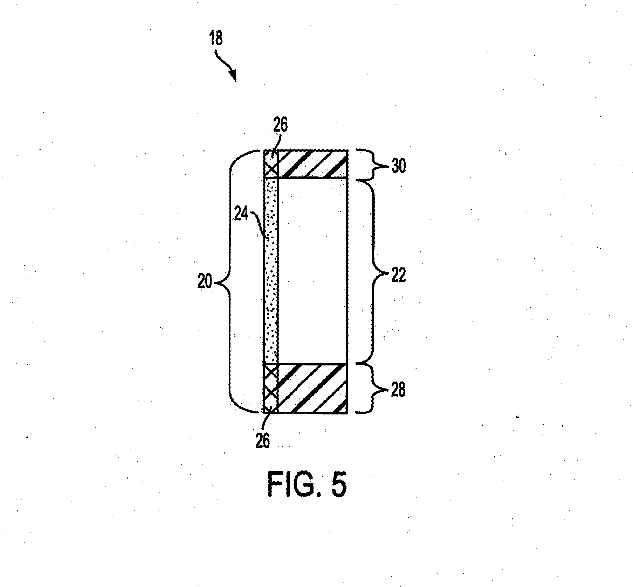

The legacy, e.g., Release 8, bandwidths are 6,15, 25, 50, 75 or 100 RBs and legacy UEs will only "see" this bandwidth in uplink and downlink and receive its downlink control channel in the legacy control region within the legacy bandwidth. This can be seen in Figure 5 which shows an extended bandwidth carrier 18. The extended bandwidth carrier 18 includes an extended bandwidth 20, which include a legacy bandwidth 22, a legacy control region 24 and additional control regions 26. Therefore, according to examples, the legacy UE can only see the legacy bandwidth 22 and the legacy control region 24 while a new UE can see the entire extended bandwidth carrier 18 and its components.

According to examples, a new, non-legacy UE can, in addition to operating in the legacy bandwidth, also utilize the extended region(s) (also known as segments) of the extended carrier and thereby have access to an extended bandwidth for data use, control reception and transmission. The extended bandwidth carrier can have a double sided extension for the downlink as shown in Figure 5 by the extended regions, which include the additional resource blocks, 28 and 30. Both new UEs and legacy UEs can be addressed in the normal control region 24. The additional control region(s) 26 can be utilized by new UEs for full bandwidth control signaling.

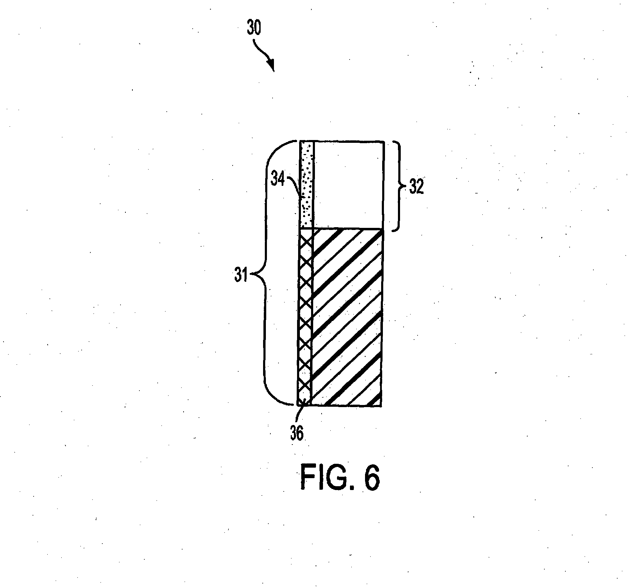

According to examples, there can be a single side extended bandwidth carrier for downlink where the legacy bandwidth is configured as comparably smaller than the extended bandwidth as shown in Figure 6. Figure 6 shows an extended bandwidth carrier 30 which includes an extended bandwidth 31 which includes a legacy bandwidth 32, a legacy control region 34 and an additional control region 36. This can be beneficial if the number of legacy terminals is outnumbered by the number of new terminals and an operator desires to only allocate a relative smaller portion of the extended bandwidth 31 to support legacy terminals. The legacy bandwidth 32 within the extended bandwidth 31 can be configurable to meet actual demands when terminal population migrates from legacy to new versions. Furthermore, one or all of the extended regions can be disabled and the system will then operate in a narrower, i.e., the legacy, bandwidth, which can be useful for, e.g., energy saving and/or interference pollution reduction. Additionally, the size of the extendable region(s) can be varied as desired.

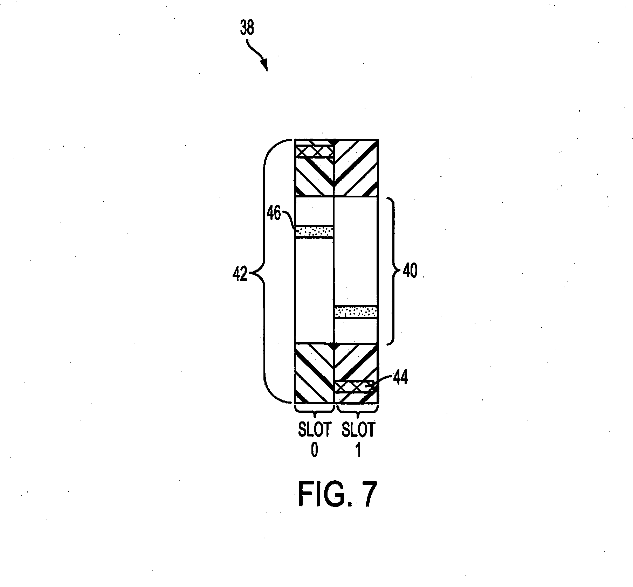

According to examples, Figure 7 shows a double sided extended bandwidth carrier 38 with two slots in the uplink where a new UE may transmit its control information, e.g., physical uplink control channel (PUCCH), in either the legacy bandwidth 40 or in the new extended bandwidth 42. In this purely illustrative example, slot hopping of the alternative and new PUCCH 44 is adopted as for the legacy PUCCH 46. It is expected that the new UEs should only experience PUCCH interference from other new UEs and not from legacy UEs.

According to examples, the control region for new terminals may be an extension of the control region into the legacy region, i.e., a continuation of the first 1, 2,3 or 4 orthogonal frequency division multiplexing (OFDM) symbols in each subframe into the extended region. This can be seen in Figures 5 and 6 where the control regions touch, e.g., control regions 24 and 26 touch in Figure 5 and control regions 34 and 36 touch in Figure 6. Since the bandwidth of the extended region of the carrier compared to the legacy bandwidth can be arbitrary, and the number of legacy UEs compared to the number of new UEs varies dynamically, the demand for control signalling resources in the additional control region also can vary dynamically.

According to an example, a solution can be to use a static resource reservation, however this may lead to unnecessary resource reservation or resource shortage. According to another exemplary embodiments, it may be preferable to use a dynamic resource reservation and it can be possible to configure the resources, e.g., the number of OFDM symbols used for control in the extended region, separately from the number of OFDM symbols for control in the legacy region. If there is no need to use additional control resources in the extended region, which are accessible only for new terminals, then it is possible to disable the use of control symbols in the extended region. The related configuration signalling for the additional control region(s) may take place in the legacy control region since the legacy region is always accessible.

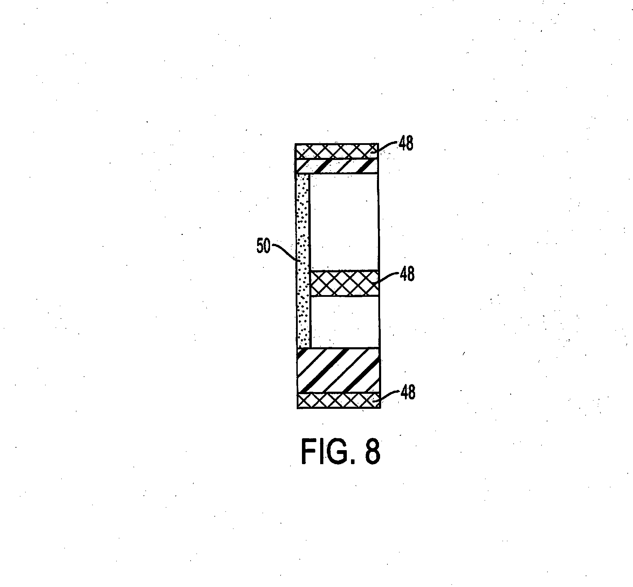

According to an alternative example, the additional control region could be placed elsewhere in the extended bandwidth carrier where the new UE can receive it without interfering with legacy UEs. An example of this can be seen in Figure 8 where the downlink control region(s) 48 have been placed at the extended band edges or placed somewhere in the data region of the legacy system operation while the legacy control region 50 is in a more conventional location. This approach can allow for new UEs to operate with a bandwidth in-between legacy carrier bandwidth and the full bandwidth of the extended carrier, as long as the new UE's associated control and data signaling is within the monitored bandwidth. If a new UE is not required to read control information from the legacy region this approach can also enable bandwidths less wide than only the extension regions.

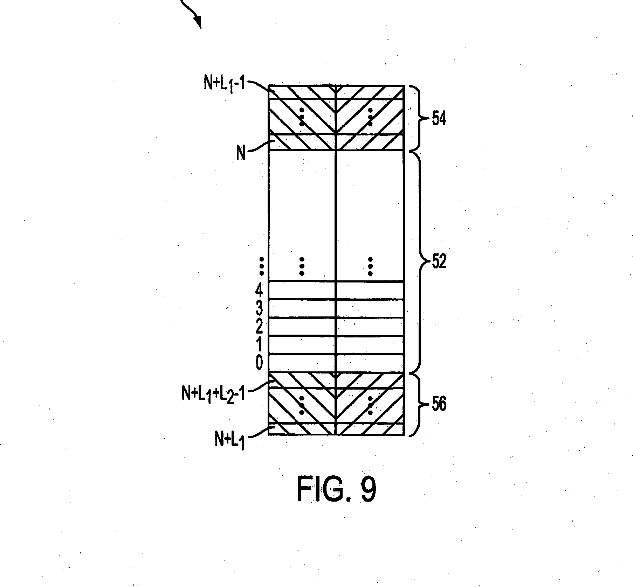

According to examples, physical resource block (PRB) pairs can be numbered to provide a common reference in a system for scheduling purposes. To ensure backward compatibility and joint operation of legacy and new UEs a common reference can be used for scheduling. Exemplary embodiments can include common PRB pair numbering of the carrier in the legacy bandwidth and to continue this numbering continuously in the extended regions in a predefined manner. As shown in Figure 9, numbering of the N PRB pairs in the legacy bandwidth 52 starts with 0 and continues to N-1. In the first extended region side 54 the first PRB pair continues the sequence and can be assigned the number N. The numbering sequence for the PRB pairs in the first extended region side 54 continues to N+L₁-1 where it has been assumed that there are L, PRB pairs in one side of the extended region. If the extended bandwidth carrier 58 is double sided, the numbering continues in the second extended region side 56, starting with N+L₁ and continues up to N+L₁+L₂-1 where L₂ is the number of PRB pairs in the second extended region side 56.

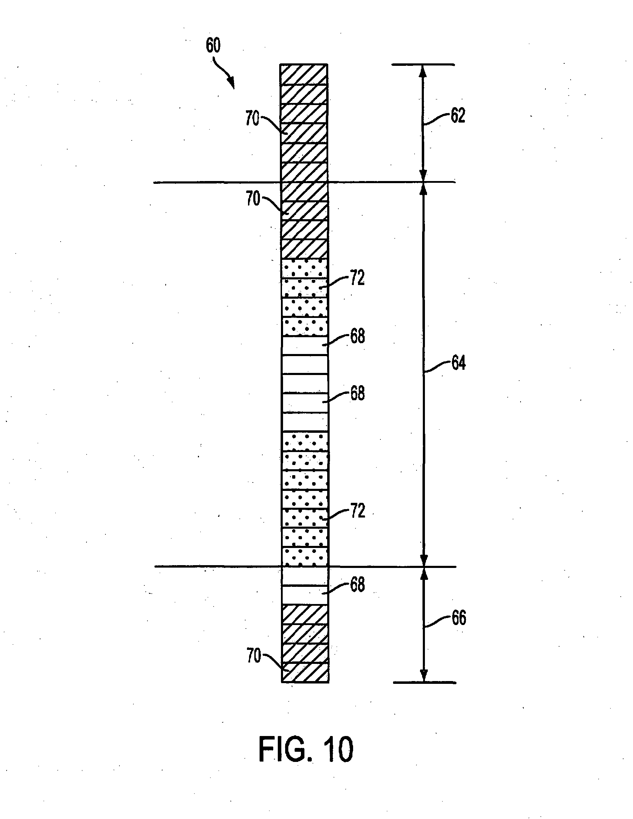

According to examples, Figure 10 shows an example of scheduling for an extended bandwidth carrier using wrap around numbering. The extended carrier bandwidth 60 has a first extended bandwidth section 62, a legacy bandwidth 64 and a second extended bandwidth section 66. The extended bandwidth carrier 60 also includes empty PRBs 68, scheduled new UE PRBs 70 and scheduled legacy UE PRBs 72. Using this exemplary wrap around technique, indication of the scheduled resources in both ends of the extended bandwidth carrier 60 can occur with a contiguous resource allocation due to the wrap around numbering. If the scheduled PRBs for the new UE are not physically adjacent to each other, the resource allocation in the downlink control signaling can be simplified since they are adjacent in the PRB numbering domain. For instance, it can be sufficient to signal the start and end PRB number.

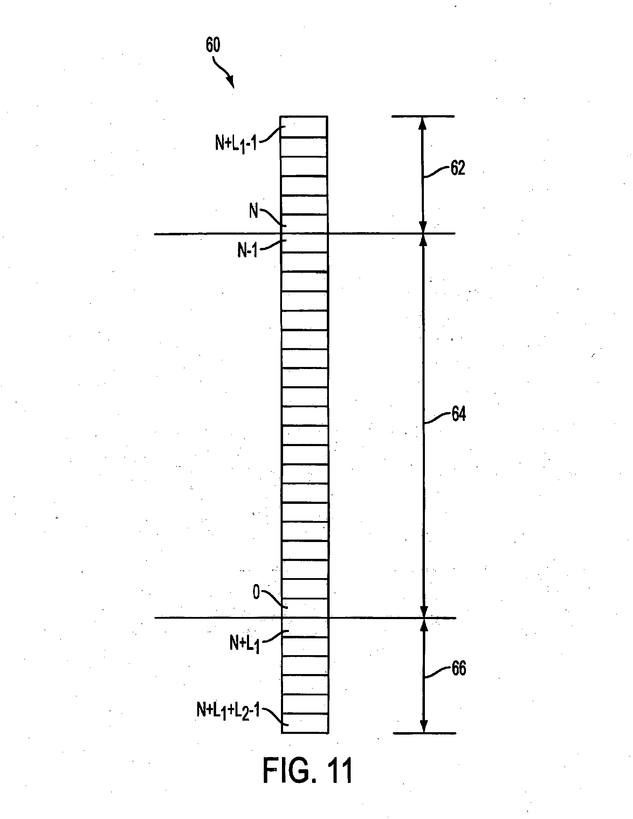

According to an alternative example, the wrap around number can be inversed (as compared to previous examples) for the second extended bandwidth section 66 as shown in Figure 11. This can be seen by comparing the numbering scheme associated with the extended region 56 shown in Figure 9 to the numbering scheme associated with the second extended bandwidth section 66 as shown in Figure 11. Using this exemplary alternative numbering scheme, a new UE can be scheduled with a large number of contiguous PRBs which can be centered on the legacy bandwidth 64, but still less wide than the full extended bandwidth.

According to examples, using a PRB pair numbering scheme which is common for both legacy and new UEs can allow for the backward compatibility. Also the exemplary PRB pair numbering scheme can allow for scheduling both the legacy and new UEs arbitrarily without restrictions despite having different system bandwidths. Furthermore, the exemplary PRB pair numbering scheme can provide transparency for new UEs with respect to whether the extended bandwidth carrier is single or double sided (due to the "wrap around" of the RB pair numbering) which simplifies and enables reuse of legacy methods e.g., the scheduling for these new UEs.

According to an example, a new UE can obtain the total legacy PRB size (N in the present example) from legacy control channels, e.g., the physical broadcast channel (PBCH) in LTE Rel-8. A new control signaling, in the form of either a common control channel or a dedicated control channel, can be communicated to the new UE to inform the new UE of the total extended PRB size and the actual physical configuration of the extended PRBs. One non-limiting exemplary control message format for this example can be an integer pair where the first integer indicates the number of additional PRBs with frequencies above the legacy PRB region and the second integer indicates the number of additional PRBs with frequencies below the legacy PRB region.

For example, consider the extended bandwidth carrier 58 shown in Figure 9. Therein the integer pair to be communicated to the new UE is [L1, L2], where L1 indicates additional PRBs with frequencies above the legacy PRB region and L2 indicates additional PRBs with frequencies below the legacy PRB region. For another example consider the extended bandwidth carrier 30 shown in Figure 6. Therein the integer pair to be communicated to the new UE is (0, L), which indicates there is only one additional PRB region of size L with frequencies below the legacy PRB region.

According to another example, another new control message, carried in the form of either a common control channel or a dedicated control channel, can be communicated to a new UE to inform the new UE of the physical configuration of the entire extended bandwidth carrier. One non-limiting exemplary control message format for this example can be an integer triple where the first integer indicates the number of PRBs for the legacy bandwidth, the second integer indicates the number of additional PRBs with frequencies above the legacy PRB region and the third integer indicates the number of additional PRBs with frequencies below the legacy PRB region. For the example shown in Figure 9, the integer triple communicated to a new UE is (N, L1, L2), indicating N PRBs for the legacy bandwidth, L1 additional PRBs with frequencies above the legacy PRB region and L2 additional PRBs with frequencies below the legacy PRB region. When using virtual resource blocks (VRBs), there can be a VRB numbering domain with the VRB corresponding to the extended region(s) being appended to the VRBs from the legacy region.

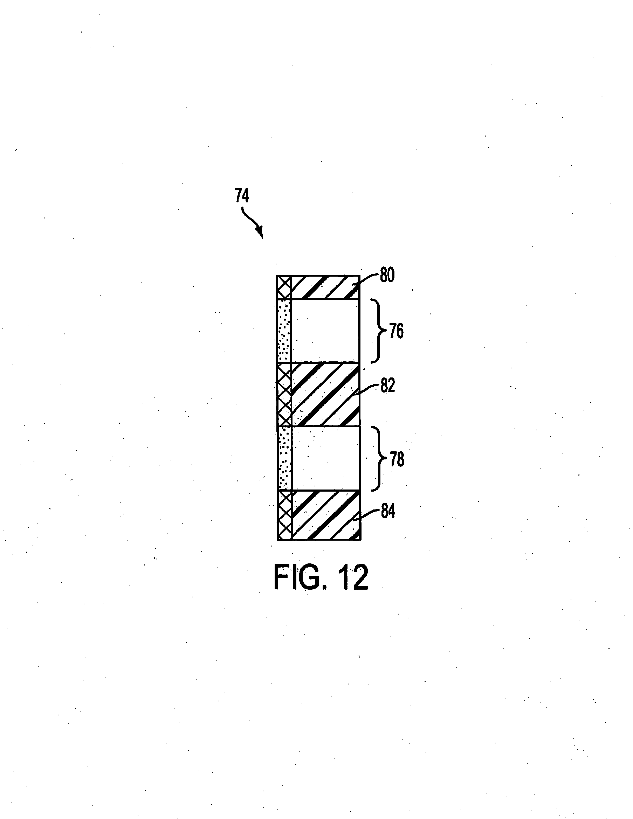

According to examples, there can be cases where it may be advantageous to have multiple legacy carriers within a single extended bandwidth carrier. Figure 12 shows an example where two legacy bandwidth carriers 76 and 78 are embedded within the extended bandwidth carrier 74. New and legacy UEs can operate in the legacy bandwidth(s) 76 and 78 while only new UEs can operate in the extended non-legacy regions 80, 82 and 84 of the extended bandwidth carrier 74.

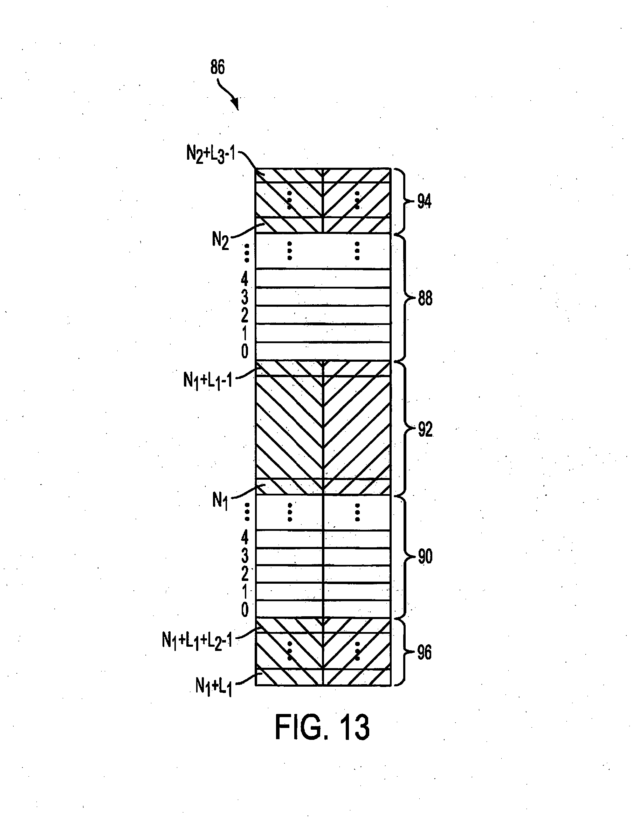

According to examples, PRB numbering in the case of multiple legacy carriers can be modified to maintain common PRB numbering across the whole extended bandwidth carrier. Figure 13 shows an example of PRB numbering with two legacy carriers 88 and 90 within the extended bandwidth carrier 86. In this example, the PRB numbering for a legacy carrier is extended to the additional control region that is higher in frequency than the legacy carrier. When there is an extended region that is not higher in frequency than any legacy carrier, the PRB numbering for the lowest frequency legacy carrier is extended cyclically as shown in the example associated with Figure 9. To ensure that PRB numbering is unique, the PRB numbers can be prefixed with a flag CF, i.e., a carrier flag which indicates which legacy carrier the PRB is associated with.

Thus, according to examples as shown in Figure 11, PRB numbering for the extended region labelled L₁ 92, in between the two extended carriers, can be carried out as an extension of the numbering for the legacy carrier N₁. Similarly, the highest extended region in frequency labelled L₃ 94, can be numbered as an extension of the legacy carrier N₂. The lowest frequency extended region labelled L₂ 96, can be numbered as a cyclic extension of the legacy carrier N₁ with the numbering continuing from the end of the extended region L₁, to the beginning of the region L₂. Thus, the legacy region N₁ and its two neighbouring extended regions can be numbered as shown Figure 9. When referring to the PRB numbers the carrier flag prefix can be used to distinguish between the PRB numbers extended from the two legacy carriers. For example, PRB number 0 for each of the legacy carriers can be distinguished by referring to the carrier flag, e.g., CF1 and CF2 respectively.

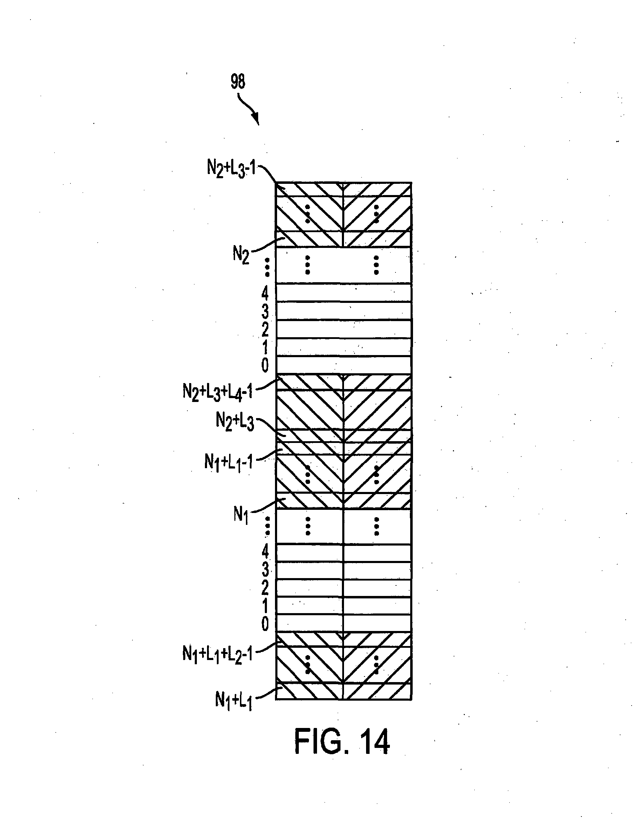

According to another examples, the association of the extended regions may be signalled explicitly to the UEs. In this case, the PRB numbering can be extended from a legacy carrier to its associated extension regions cyclically as shown in Figure 9. An example of this is shown in Figure 14, which has an extended bandwidth carrier 98 which includes extended regions L₁ and L₂ which are associated with legacy carrier N₁, and extended regions L₃ and L₄ which are associated with legacy carrier N₂.

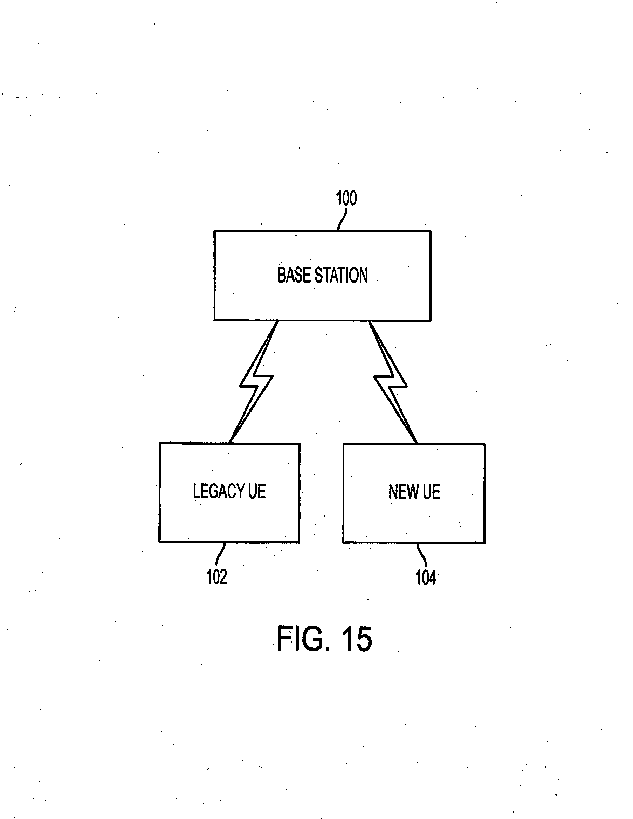

According to examples described herein there can be an extended bandwidth carrier which can include a legacy carrier. Portions of the extended bandwidth carrier can be used by legacy UEs and new UEs. Information describing the extended bandwidth carrier can be transmitted by a base station, e.g., an eNodeB, to both the legacy UEs and new UEs. An example of this is shown in Figure 15, where a base station 100 is in communication with both a legacy UE 102 and a new UE 104.

Examples described herein provide for a number of various features to be realized in the context of legacy UEs, new UEs, base stations and various associated signaling. For example, examples provide for a control channel for new terminals with enhanced capacity and potentially reduced interference when the carrier is extended by segments. Examples enable the possibility to schedule a legacy and a new user equipment without restrictions, with the same (legacy) resource allocation method, despite their different system bandwidths. A separate control of control region size for extended region(s), including configuring no control (zero size) to cope with increased control resource demands when new terminals migrate into the system can exist. Additionally, an RB numbering method that is common for the legacy and new terminals in the legacy bandwidth and agnostic to the bandwidth and number of extensions/segments in the extended region (e.g. single/double sided extension) can be used.

Other examples include, providing the associated control signaling to inform the terminals about the configuration in said RB numbering method. Providing a means to have multiple legacy bandwidths within one carrier and providing the associated control signaling to inform the terminals how the carrier is configured can also be achieved by examples described herein. Also examples can allow for the ability to operate the system with a small legacy bandwidth within a large extended bandwidth which can be beneficial for energy saving reasons, when only the legacy bandwidth is active during off-peak hours.

According to examples, a method for using an extended bandwidth carrier includes the steps illustrated in Figure 14. Therein, at step 106, receiving, at a transceiver, control signaling on the extended bandwidth carrier, the extended bandwidth carrier having a legacy bandwidth and additional resource blocks disposed outside of the legacy bandwidth and the extended bandwidth having: a first control region disposed within a legacy bandwidth shown in block 108; and a second control region disposed either within the legacy bandwidth or within the additional resource blocks shown in block 110, wherein the transceiver can receive the control signaling in either or both of the first control region and the second control region.

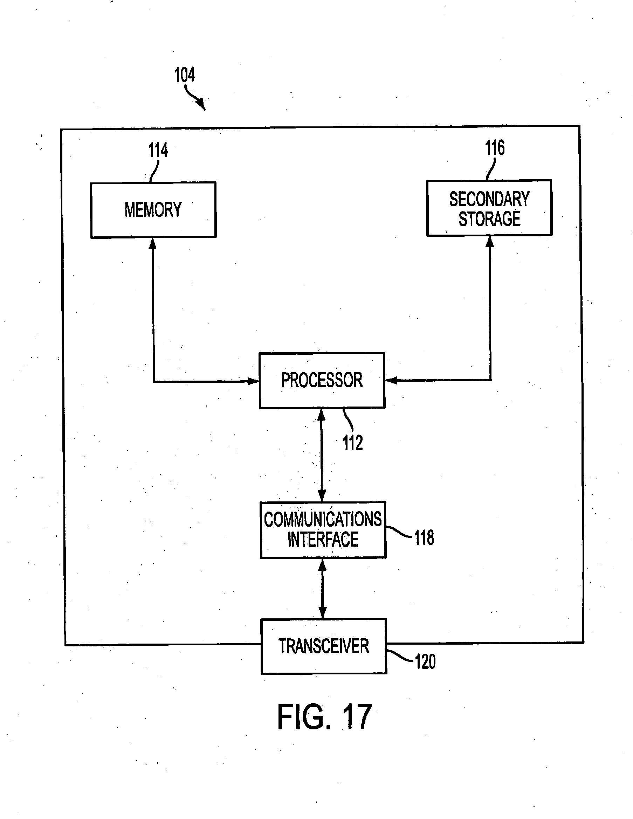

An exemplary new UE 104 which can either use, transmit, or receive signaling associated with an extended bandwidth carrier is generically illustrated in Figure 17. The new UE 104 can contain a processor 112 (or multiple processor cores), memory 114, one or more secondary storage devices 116, a communications interface unit 118 to facilitate communications and a transceiver 120. The processor 114 is configured to understand received instructions for using the extended bandwidth carrier. Memory 116 can be used to store information associated with using the extended bandwidth carrier, e.g., implementing or understanding the PRB numbering scheme. Additionally, the communications interface unit 118 and the transceiver 120 can be configured for transmitting/receiving messages associated with a new control channel(s) and/or the extended bandwidth carrier, e.g., associated with aspects such as modulation/demodulation frequencies, filtering bandwidth, and the like. Thus, the new UE 104 can perform the embodiments and examples described herein associated with a new UE 104.

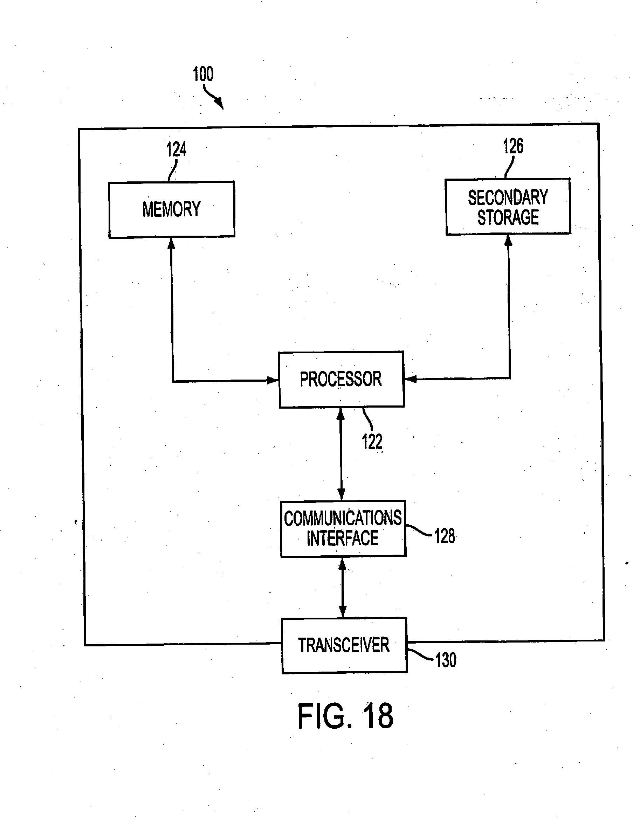

An exemplary base station 100 which can either use, transmit, or receive signaling associated with an extended bandwidth carrier is generically illustrated in Figure 18. The base station 100 can contain a processor 122 (or multiple processor cores), memory 124, one or more secondary storage devices 126, a communications interface unit 128 to facilitate communications and a transceiver 130. The processor 122 is configured to transmit instructions describing the extended bandwidth carrier and understand received information on the extended bandwidth carrier from one or more new UEs 104. Memory 124 can be used to store information associated with using the extended bandwidth carrier, e.g., implementing or understanding the PRB numbering scheme. Additionally, the communications interface unit 128 and the transceiver 130 can be configured for transmitting/receiving messages associated with a new control channel(s) and/or the extended bandwidth carrier, e.g., associated with aspects such as modulation/demodulation frequencies, filtering bandwidths, and the like. Thus, the base station 100 can perform the embodiments and examples described herein from its point of view.

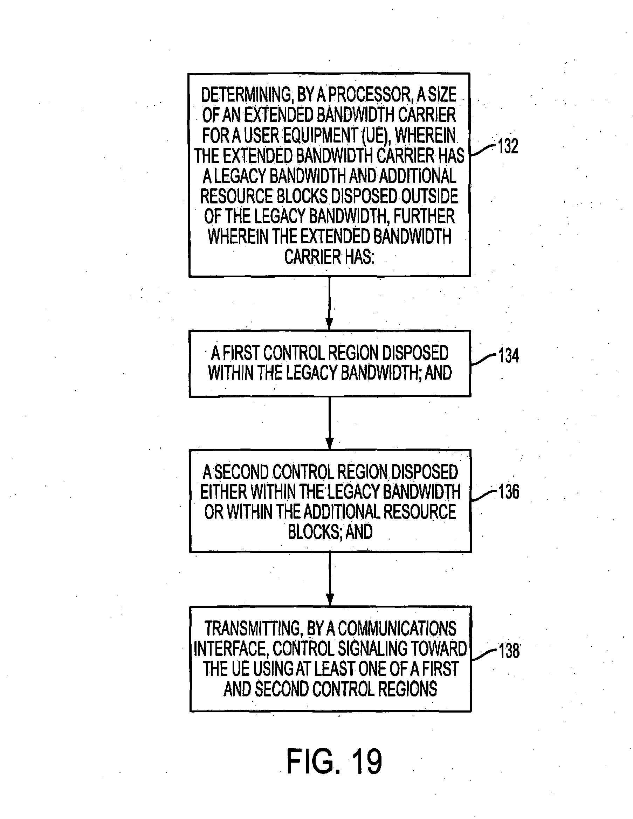

According to examples, a method for a base station to use an extended bandwidth carrier includes the steps illustrated in Figure 19. Therein, at step 132 determining, by a processor, a size of an extended bandwidth carrier for a user equipment (UE), wherein the extended bandwidth carrier has a legacy bandwidth and additional resource blocks disposed outside of the legacy bandwidth, further wherein the extended bandwidth carrier has: a first control region disposed within the legacy bandwidth as shown in block 134; and a second control region disposed either within the legacy bandwidth or within the additional resource blocks as shown in block 136; and at step 138 transmitting, by a communications interface, control signaling toward the UE using at least one of a first and second control regions.

The above-described embodiments and examples are intended to be illustrative in all respects, rather than restrictive, of the present invention. All such variations and modifications are considered to be within the scope of the present invention as defined by the following claims. For example, other variations for associating extended regions to legacy carriers implicitly or explicitly and for extending PRB numbering are possible. No element, act, or instruction used in the description of the present application should be construed as critical or essential to the invention unless explicitly described as such. Also, as used herein, the article "a" is intended to include one or more items.

## Claims

1. A user equipment, UE, (104) comprising:
a transceiver (120) configured to receive control signaling on an extended bandwidth carrier (18), the extended bandwidth carrier (18) having a legacy bandwidth (22) and additional resource blocks (28, 30) disposed outside of the legacy bandwidth (22) and the extended bandwidth carrier (18) having
a first control region (50) disposed within the legacy bandwidth; **characterised by** the extended bandwidth carrier having
a second control region (48) disposed inside the legacy bandwidth, wherein the second control region is not disposed within a legacy control region and does not occupy the full extended system bandwidth,
wherein the transceiver (120) can receive the control signaling in either or both of the first control region (50) and the second control region (48).

2. A method for a user equipment, UE, (104) to use an extended bandwidth carrier, comprising:
receiving, at a transceiver, control signaling on the extended bandwidth carrier, the extended bandwidth carrier having a legacy bandwidth and additional resource blocks disposed outside of the legacy bandwidth and the extended bandwidth carrier having (106):
a first control region disposed within the legacy bandwidth; **characterised by** the extended bandwidth carrier having
a second control region disposed inside the legacy bandwidth, wherein the second control region is not disposed within a legacy control region and does not occupy the full extended system bandwidth,
wherein the transceiver can receive the control signaling in either or both of the first control region and the second control region.

3. The method of claim 2, further comprising:
using two legacy bandwidths with each legacy bandwidth having adjacent, additional resource blocks.

4. The method of claims 2-3, wherein physical resource block, PRB, pairs are numbered in the bandwidth and a common numbering scheme continues through both the legacy bandwidth and the additional resource blocks in either a frequency increasing or a frequency decreasing direction.

5. The method of claims 2-4, further comprising:
receiving, by a communications interface, control signaling describing how the extended bandwidth carrier is configured.

6. The method of claims 2-5, wherein the control signaling is received by the UE on one of a common control channel or a dedicated control channel.

7. The method of claims 2-6, wherein the received control signaling includes a message which includes an integer triple with a first integer indicating the number of physical resource block, PRB, pairs for the legacy bandwidth, a second integer indicating the number of additional PRBs with frequencies above the legacy bandwidth frequency and a third integer indicating the number of additional PRBs with frequencies below the legacy bandwidth frequency

8. The method of claims 2-7, wherein the legacy bandwidth includes a bandwidth of at least one of 6, 15, 25, 50, 75 and 100 resource blocks in size, wherein a resource block corresponds to one slot in a time domain and twelve contiguous subcarriers in a frequency domain.

9. A base station (100) **characterised by**:
a processor (122) configured to determine a size of an extended bandwidth carrier (18) for a user equipment, UE, (104), wherein the extended bandwidth carrier (18) has a legacy bandwidth (22) and additional resource blocks (28, 30) disposed outside of the legacy bandwidth (22), further wherein the extended bandwidth carrier (18) has:
a first control region (50) disposed within the legacy bandwidth;
a second control region (48) disposed inside the legacy bandwidth, wherein the second control region is not disposed within a legacy control region and does not occupy the full extended system bandwidth; and
a communications interface (130) configured to transmit control signaling toward the UE (104) using at least one of a first and second control regions.

10. The base station of claim 9, wherein the base station is an eNodeB.

11. A method for a base station (100) an extended bandwidth carrier, **characterised by** the base station using comprising:
determining, by a processor, a size of an extended bandwidth carrier for a user equipment, UE, wherein the extended bandwidth carrier has a legacy bandwidth and additional resource blocks disposed outside of the legacy bandwidth, further wherein the extended bandwidth carrier has:
a first control region disposed within the legacy bandwidth; and
a second control region disposed inside the legacy bandwidth, wherein the second control region is not disposed within a legacy control region and does not occupy the full extended system bandwidth; and
transmitting, by a communications interface, control signaling toward the UE using at least one of a first and second control regions.

12. The method of claim 11, wherein the control signaling describes a manner in which the extended bandwidth carrier is configured.

13. The method of claims 11-12, further comprising:
transmitting the control signaling on one of a common control channel or a dedicated control channel.

14. The method of claims 11-13, wherein the transmitted control signaling includes a message which includes an integer triple with a first integer indicating the number of physical resource block, PRB, pairs for the legacy bandwidth, a second integer indicating the number of additional PRBs with frequencies above the legacy bandwidth frequency and a third integer indicating the number of additional PRBs with frequencies below the legacy bandwidth frequency.

15. The method of claims 11-14, further comprising:
dynamically adding the additional resource blocks to both sides of the legacy bandwidth.

16. The method of claims 11-14, further comprising:
dynamically adding the additional resource blocks are on one side of the legacy bandwidth.

17. The method of claims 11-16, wherein the base station is an eNodeB.

18. The method of claims 11-17, wherein the legacy bandwidth includes a bandwidth of at least one of 6, 15, 25, 50, 75 and 100 resource blocks in size, wherein a resource block corresponds to one slot in a time domain and twelve contiguous subcarriers in a frequency domain.

## Patentansprüche

1. Benutzergerät, UE, (104), Folgendes umfassend:
einen Transceiver (120), konfiguriert zum Empfangen von Steuersignalisierung auf einem Träger mit erweiterter Bandbreite (18), wobei der Träger mit erweiterter Bandbreite (18) eine Legacy-Bandbreite (22) und zusätzliche Ressourcenblöcke (28, 30) hat, die außerhalb der Legacy-Bandbreite (22) angeordnet sind, und der Träger mit erweiterter Bandbreite (18) Folgendes hat:
einen ersten Steuerbereich (50), der innerhalb der Legacy-Bandbreite angeordnet ist; **dadurch gekennzeichnet, dass** der Träger mit erweiterter Bandbreite
einen zweiten Steuerbereich (48) hat, der im Inneren der Legacy-Bandbreite angeordnet ist, worin der zweite Steuerbereich nicht innerhalb eines Legacy-Steuerbereichs angeordnet ist und nicht die gesamte erweiterte Systembandbreite einnimmt,
worin der Transceiver (120) die Steuersignalisierung in einem oder beiden des ersten Steuerbereichs (50) und des zweiten Steuerbereichs (48) empfangen kann.

2. Verfahren für ein Benutzergerät, UE, (104) zum Verwenden eines Trägers mit erweiterter Bandbreite, Folgendes umfassend:
Empfangen von Steuersignalisierung an einem Transceiver auf dem Träger mit erweiterter Bandbreite, wobei der Träger mit erweiterter Bandbreite eine Legacy-Bandbreite und zusätzliche Ressourcenblöcke hat, die außerhalb der Legacy-Bandbreite angeordnet sind, und der Träger mit erweiterter Bandbreite Folgendes hat (106):
einen ersten Steuerbereich, der innerhalb der Legacy-Bandbreite angeordnet ist; **dadurch gekennzeichnet, dass** der Träger mit erweiterter Bandbreite
einen zweiten Steuerbereich hat, der im Inneren der Legacy-Bandbreite angeordnet ist, worin der zweite Steuerbereich nicht innerhalb eines Legacy-Steuerbereichs angeordnet ist und nicht die gesamte erweiterte Systembandbreite einnimmt,
worin der Transceiver die Steuersignalisierung in einem oder beiden des ersten Steuerbereichs und des zweiten Steuerbereichs empfangen kann.

3. Verfahren nach Anspruch 2, außerdem umfassend:
das Verwenden von zwei Legacy-Bandbreiten, wobei jede Legacy-Bandbreite benachbarte zusätzliche Ressourcenblöcke hat.

4. Verfahren nach den Ansprüchen 2-3, worin PRB(physikalische Ressourcenblock)-Paare in der Bandbreite nummeriert sind und ein gemeinsames Nummerierschema sich sowohl durch die Legacy-Bandbreite als auch die zusätzlichen Ressourcenblöcke entweder in einer Richtung steigender Frequenz oder einer Richtung fallender Frequenz fortsetzt.

5. Verfahren nach den Ansprüchen 2-4, außerdem umfassend:
durch eine Kommunikationsschnittstelle Steuersignalisierung empfangen, die beschreibt, wie der Träger mit erweiterter Bandbreite konfiguriert ist.

6. Verfahren nach den Ansprüchen 2-5 worin die Steuersignalisierung vom UE auf einem von Folgenden empfangen wird: einem gemeinsam benutzten Steuerkanal oder einem dedizierten Steuerkanal.

7. Verfahren nach den Ansprüchen 2-6, worin die empfangene Steuersignalisierung eine Nachricht einschließt, die ein Tripel von ganzen Zahlen einschließt, wobei eine erste ganze Zahl die Anzahl von PRB(physikalischer Ressourcenblock)-Paaren für die Legacy-Bandbreite anzeigt, eine zweite ganze Zahl die Anzahl von zusätzlichen PRBs mit Frequenzen anzeigt, die über der Legacy-Bandbreite-Frequenz liegen, und eine dritte ganze Zahl die Anzahl von zusätzlichen PRBs mit Frequenzen anzeigt, die unter der Legacy-Bandbreite-Frequenz liegen.

8. Verfahren nach den Ansprüchen 2-7, worin die Legacy-Bandbreite eine Bandbreite mindestens einer der folgenden Größen einschließt: 6, 15, 25, 50, 75 und 100 Ressourcenblöcke, worin ein Ressourcenblock einem Schlitz in einer Zeitdomäne und zwölf benachbarten Unterträgern in einer Frequenzdomäne entspricht.

9. Basisstation (100), **gekennzeichnet durch**
einen Prozessor (122), konfiguriert zum Bestimmen einer Größe eines Trägers mit erweiterter Bandbreite (18) für ein Benutzergerät, UE, (104), worin der Träger mit erweiterter Bandbreite (18) eine Legacy-Bandbreite (22) und zusätzliche Ressourcenblöcke (28, 30) hat, die außerhalb der Legacy-Bandbreite (22) angeordnet sind, worin außerdem der Träger mit erweiterter Bandbreite (18) Folgendes hat:
einen ersten Steuerbereich (50), der innerhalb der Legacy-Bandbreite angeordnet ist;
einen zweiten Steuerbereich (48), der im Inneren der Legacy-Bandbreite angeordnet ist, worin der zweite Steuerbereich nicht innerhalb eines Legacy-Steuerbereichs angeordnet ist und nicht die gesamte erweiterte Systembandbreite einnimmt; und
eine Kommunikationsschnittstelle (130), konfiguriert zum Übertragen von Steuersignalisierung zum UE (104) unter Verwendung von mindestens einem eines ersten und eines zweiten Steuerbereichs.

10. Basisstation nach Anspruch 9, worin die Basisstation ein eNodeB ist.

11. Verfahren für eine Basisstation (100), **dadurch gekennzeichnet, dass** die Basisstation einen Träger mit erweiterter Bandbreite verwendet, Folgendes umfassend:
Bestimmen einer Größe eines Trägers mit erweiterter Bandbreite durch einen Prozessor für ein Benutzergerät, UE, worin der Träger mit erweiterter Bandbreite eine Legacy-Bandbreite hat und zusätzliche Ressourcenblöcke, die außerhalb der Legacy-Bandbreite angeordnet sind, worin außerdem der Träger mit erweiterter Bandbreite Folgendes hat:
einen ersten Steuerbereich, der innerhalb der Legacy-Bandbreite angeordnet ist; und
einen zweiten Steuerbereich, der im Inneren der Legacy-Bandbreite angeordnet ist, worin der zweite Steuerbereich nicht innerhalb eines Legacy-Steuerbereichs angeordnet ist und nicht die gesamte erweiterte Systembandbreite einnimmt; und
Übertragen von Steuersignalisierung durch eine Kommunikationsschnittstelle zum UE unter Verwendung von mindestens einem eines ersten und eines zweiten Steuerbereichs.

12. Verfahren nach Anspruch 11, worin die Steuersignalisierung eine Weise beschreibt, auf die der Träger mit erweiterter Bandbreite konfiguriert ist.

13. Verfahren nach den Ansprüchen 11-12, außerdem umfassend:
Übertragen der Steuersignalisierung auf einem von einem gemeinsam benutzten Steuerkanal oder einem dedizierten Steuerkanal.

14. Verfahren nach den Ansprüchen 1-13, worin die übertragene Steuersignalisierung eine Nachricht einschließt, die ein Tripel von ganzen Zahlen einschließt, wobei eine erste ganze Zahl die Anzahl von PRB(physikalischer Ressourcenblock)-Paaren für die Legacy-Bandbreite anzeigt, eine zweite ganze Zahl die Anzahl von zusätzlichen PRBs mit Frequenzen anzeigt, die über der Legacy-Bandbreite-Frequenz liegen, und eine dritte ganze Zahl die Anzahl von zusätzlichen PRBs mit Frequenzen anzeigt, die unter der Legacy-Bandbreite-Frequenz liegen.

15. Verfahren nach den Ansprüchen 11-14, außerdem umfassend:
dynamisches Addieren der zusätzlichen Ressourcenblöcke auf beide Seiten der Legacy-B andbreite.

16. Verfahren nach den Ansprüchen 11-14, außerdem umfassend:
dynamisches Addieren der zusätzlichen Ressourcenblöcke auf eine Seite der Legacy-B andbreite.

17. Verfahren nach den Ansprüchen 11-16, worin die Basisstation ein eNodeB ist.

18. Verfahren nach den Ansprüchen 11-17, worin die Legacy-Bandbreite eine Bandbreite mindestens einer der folgenden Größen einschließt: 6, 15, 25, 50, 75 und 100 Ressourcenblöcke, worin ein Ressourcenblock einem Schlitz in einer Zeitdomäne und zwölf benachbarten Unterträgern in einer Frequenzdomäne entspricht.

## Revendications

1. Équipement d'utilisateur, UE, (104) comprenant :
un émetteur-récepteur (120) configuré de manière à recevoir une signalisation de commande sur une porteuse à bande passante élargie (18), la porteuse à bande passante élargie (18) présentant une bande passante héritée (22) et des blocs de ressources supplémentaires (28, 30) disposés à l'extérieur de la bande passante héritée (22), et la porteuse à bande passante élargie (18) présentant :
une première zone de commande (50) disposée au sein de la bande passante héritée ; **caractérisé en ce que** la porteuse à bande passante élargie présente :
une seconde zone de commande (48) disposée à l'intérieur de la bande passante héritée, dans lequel la seconde zone de commande n'est pas disposée au sein d'une zone de commande héritée et n'occupe pas la totalité de la bande passante de système élargie ;
dans lequel l'émetteur-récepteur (120) peut recevoir la signalisation de commande dans une ou les deux zones parmi la première zone de commande (50) et la seconde zone de commande (48).

2. Procédé, pour un équipement d'utilisateur, UE, (104) d'utilisation d'une porteuse à bande passante élargie, comprenant les étapes ci-dessous consistant à :
recevoir, au niveau d'un émetteur-récepteur, une signalisation de commande sur la porteuse à bande passante élargie, la porteuse à bande passante élargie présentant une bande passante héritée et des blocs de ressources supplémentaires disposés à l'extérieur de la bande passante héritée, et la porteuse à bande passante élargie présentant (106):
une première zone de commande disposée au sein de la bande passante héritée ; **caractérisé en ce que** la porteuse à bande passante élargie présente :
une seconde zone de commande disposée à l'intérieur de la bande passante héritée, dans lequel la seconde zone de commande n'est pas disposée au sein d'une zone de commande héritée et n'occupe pas la totalité de la bande passante de système élargie ;
dans lequel l'émetteur-récepteur peut recevoir la signalisation de commande dans une ou les deux zones parmi la première zone de commande et la seconde zone de commande.

3. Procédé selon la revendication 2, comprenant en outre l'étape ci-dessous consistant à :
utiliser deux bandes passantes héritées, où chaque bande passante héritée présente des blocs de ressources supplémentaires adjacents.

4. Procédé selon les revendications 2 à 3, dans lequel des paires de blocs de ressources physiques, PRB, sont numérotées dans la bande passante et un schéma de numérotation commun se poursuit à travers la bande passante héritée et les blocs de ressources supplémentaires dans une direction d'augmentation de fréquence ou dans une direction de diminution de fréquence.

5. Procédé selon les revendications 2 à 4, comprenant en outre l'étape ci-dessous consistant à :
recevoir, par le biais d'une interface de communication, une signalisation de commande décrivant comment la porteuse à bande passante élargie est configurée.

6. Procédé selon les revendications 2 à 5, dans lequel la signalisation de commande est reçue par l'équipement UE sur l'un d'un canal de commande commun ou d'un canal de commande dédié.

7. Procédé selon les revendications 2 à 6, dans lequel la signalisation de commande reçue inclut un message qui comprend un nombre entier triple, avec un premier nombre entier indiquant le nombre de paires de blocs de ressources physiques, PRB, pour la bande passante héritée, un deuxième nombre entier indiquant le nombre de blocs PRB supplémentaires avec des fréquences supérieures à la fréquence de la bande passante héritée, et un troisième nombre entier indiquant le nombre de blocs PRB supplémentaires avec des fréquences inférieures à la fréquence de la bande passante héritée.

8. Procédé selon les revendications 2 à 7, dans lequel la bande passante héritée inclut une bande passante dont la taille correspond à au moins un nombre parmi 6, 15, 25, 50, 75 et 100 blocs de ressources, dans lequel un bloc de ressources correspond à une fente dans un domaine temporel et à douze sous-porteuses contiguës dans un domaine fréquentiel.

9. Station de base (100), **caractérisée par** :
un processeur (122) configuré de manière à déterminer une taille d'une porteuse à bande passante élargie (18) pour un équipement d'utilisateur, UE, (104), dans lequel la porteuse à bande passante élargie (18) présente une bande passante héritée (22) et des blocs de ressources supplémentaires (28, 30) disposés à l'extérieur de la bande passante héritée (22), dans lequel en outre la porteuse à bande passante élargie (18) présente :
une première zone de commande (50) disposée au sein de la bande passante héritée ;
une seconde zone de commande (48) disposée à l'intérieur de la bande passante héritée, dans lequel la seconde zone de commande n'est pas disposée au sein d'une zone de commande héritée et n'occupe pas la totalité de la bande passante de système élargie ; et
une interface de communication (130) configurée de manière à transmettre une signalisation de commande vers l'équipement UE (104) en utilisant au moins l'une parmi des première et seconde zones de commande.

10. Station de base selon la revendication 9, dans laquelle la station de base est une station « eNodeB ».

11. Procédé pour une station de base (100), **caractérisé en ce que** la station de base utilise une porteuse à bande passante élargie, comprenant les étapes ci-dessous consistant à :
déterminer, par le biais d'un processeur, une taille d'une porteuse à bande passante élargie pour un équipement d'utilisateur, UE, dans lequel la porteuse à bande passante élargie présente une bande passante héritée et des blocs de ressources supplémentaires disposés à l'extérieur de la bande passante héritée, dans lequel en outre la porteuse à bande passante élargie présente :
une première zone de commande disposée au sein de la bande passante héritée ; et
une seconde zone de commande disposée à l'intérieur de la bande passante héritée, dans lequel la seconde zone de commande n'est pas disposée au sein d'une zone de commande héritée et n'occupe pas la totalité de la bande passante de système élargie ; et
transmettre, par le biais d'une interface de communication, une signalisation de commande vers l'équipement UE, en utilisant au moins l'une parmi des première et seconde zones de commande.

12. Procédé selon la revendication 11, dans lequel la signalisation de commande décrit de quelle manière la porteuse à bande passante élargie est configurée.

13. Procédé selon les revendications 11 à 12, comprenant en outre l'étape ci-dessous consistant à :
transmettre la signalisation de commande sur l'un parmi un canal de commande commun ou un canal de commande dédié.

14. Procédé selon les revendications 11 à 13, dans lequel la signalisation de commande émise inclut un message qui comprend un nombre entier triple, avec un premier nombre entier indiquant le nombre de paires de blocs de ressources physiques, PRB, pour la bande passante héritée, un deuxième nombre entier indiquant le nombre de blocs PRB supplémentaires avec des fréquences supérieures à la fréquence de la bande passante héritée, et un troisième nombre entier indiquant le nombre de blocs PRB supplémentaires avec des fréquences inférieures à la fréquence de la bande passante héritée.

15. Procédé selon les revendications 11 à 14, comprenant en outre l'étape ci-dessous consistant à :
ajouter dynamiquement les blocs de ressources supplémentaires aux deux côtés de la bande passante héritée.

16. Procédé selon les revendications 11 à 14, comprenant en outre l'étape ci-dessous consistant à :
ajouter dynamiquement les blocs de ressources supplémentaires sur un côté de la bande passante héritée.

17. Procédé selon les revendications 11 à 16, dans lequel la station de base est une station « eNodeB ».

18. Procédé selon les revendications 11 à 17, dans lequel la bande passante héritée inclut une bande passante dont la taille correspond à au moins un nombre parmi 6, 15, 25, 50, 75 et 100 blocs de ressources, dans lequel un bloc de ressources correspond à une fente dans un domaine temporel et à douze sous-porteuses contiguës dans un domaine fréquentiel.
